# EUROPÄISCHE PATENTANMELDUNG

(11) **EP 2 711 562 A1**
(43) Veröffentlichungstag der Anmeldung: **26.03.2014**
(21) Anmeldenummer: 12185860.9
(22) Anmeldetag: 25.09.2012
(51) Int. Cl.: F16B 2/14, F16B 5/06

(54) **Verbindungssystem zum Verbinden von Bauteilen**

(71) Anmelder: Siemens VAI Metals Technologies GmbH, 4031 Linz (AT)
(72) Erfinder: Gruber, Rudolf, 4731 Prambachkirchen (AT); Mayr, Alexander, 4111 Walding (AT); Semczyszyn, Alexander, 4020 Linz (AT); Thumfart, Martin, 4312 Ried (AT)
(74) Vertreter: Maier, Daniel Oliver

(57) **Zusammenfassung**

Die Erfindung betrifft ein Verbindungssystem (1) zur Verbindung von Bauteilen, umfassend mindestens ein an einem ersten Bauteil fixiertes Flächenelement (2), mindestens einen an einem zweiten Bauteil fixierten und das Flächenelement (2) in einer Ausnehmung (3) durchsetzenden Keilzapfen (4) mit einer eine Auflagefläche (5) umfassenden Aufnahmeöffnung (6), ein in der Aufnahmeöffnung (6) angeordnetes und einen ersten Keil (7) umfassendes Verkeilungssystem, wobei das Verkeilungssystem zwischen der Auflagefläche (5) und dem Flächenelement (2) eingekeilt ist und wobei das Verkeilungssystem (1) zumindest einen weiteren Keil (8) unter Bildung gegenüberliegender Angriffsflächen (9,10) umfasst.

Weiter betrifft die Erfindung die Verwendung des erfindungsgemäßen Verbindungssystems (1) zur Verbindung eines als metallurgisches Gefäß (21) ausgebildeten ersten Bauteils mit einem als Tragring (22) ausgebildeten zweiten Bauteil.

Ein weiterer Gegenstand der Erfindung ist ein Verfahren zur Verbindung, Fixierung und Lösung von Bauteilen mit dem erfindungsgemäßen Verbindungssystem (1).

## Beschreibung

### Technisches Gebiet

Die Erfindung betrifft ein Verbindungssystem zur Verbindung von Bauteilen, umfassend mindestens ein an einem ersten Bauteil fixiertes Flächenelement, mindestens einen an einem zweiten Bauteil fixierten und das Flächenelement in einer Ausnehmung durchsetzenden Keilzapfen mit einer eine Auflagefläche umfassenden Aufnahmeöffnung und ein in der Aufnahmeöffnung angeordnetes und einen ersten Keil umfassendes Verkeilungssystem, wobei das Verkeilungssystem zwischen der Auflagefläche und dem Flächenelement eingekeilt ist.

Weiter betrifft die Erfindung die Verwendung des erfindungsgemäßen Verbindungssystems zur Verbindung eines als metallurgisches Gefäß ausgebildeten ersten Bauteils mit einem als Tragring ausgebildeten zweiten Bauteil.

Ein weiterer Gegenstand der Erfindung ist ein Verfahren zur Verbindung, Fixierung und Lösung von Bauteilen mit dem erfindungsgemäßen Verbindungssystem.

### Stand der Technik

Ein aus dem Stand der Technik bekanntes Verbindungssystem zur Verbindung von Bauteilen mittels eines Keils umfasst ein an einem ersten Bauteil fixiertes Flächenelement, einen an einem zweiten Bauteil fixierten und das Flächenelement in einer Ausnehmung durchsetzenden Keilzapfen mit einer eine Auflagefläche umfassenden Aufnahmeöffnung und ein in der Aufnahmeöffnung angeordnetes und einen Keil umfassendes Verkeilungssystem, wobei das Verkeilunsgsystem zwischen der Auflagefläche und dem Flächenelement eingekeilt ist.

Zwischen der Auflagefläche und dem Flächenelement befindet sich genau ein Keil mit zwei gegenüberliegenden, zueinander schief beziehungsweise nicht parallel orientierten Angriffsflächen. Da der Keil in diesem bekannten Verbindungssystem die einzige Komponente darstellt, weist das Verkeilungssystem ebenfalls diese gegenüberliegenden, zueinander schief beziehungsweise nicht parallel orientierten Angriffsflächen auf. Der Keil liegt im eingekeilten Zustand mit einer seiner zwei Angriffsflächen an der Auflagefläche der Aufnahmeöffnung und mit der anderen Angriffsfläche am Flächenelement auf.

Nachteilig bei dieser oben genannten Orientierung der Angriffsflächen zueinander ist, dass eine beispielsweise durch Bewegungen und/oder Vibrationen und/oder Erschütterungen und/oder unterschiedliche Wärmeausdehnungen der Bauteile hervorgerufene Verschiebung des Verkeilungssystems in Bezug auf die Aufnahmeöffnung des Keilzapfens zwangsweise eine Lockerung beziehungsweise Lösung der Verbindung der Bauteile zur Folge hat.

Eine im Stand der Technik angewandte Methode, um eine solche Verschiebung beziehungsweise Lockerung des Verkeilungssystems rückgängig zu machen, beruht auf einem Nachschlagen des Verkeilungssystems beziehungsweise des Keils mittels eines Hammers in die ursprüngliche Stellung. Ein Nachteil dabei ist, dass das Nachschlagen des Verkeilungssystems mit einem erheblichen Aufwand verbunden ist. Vor allem in Gefahrenumgebungen, wie beispielsweise Hüttenwerken und/oder Stahlwerken, sind die beim Nachschlagen des Verkeilungssystems beziehungsweise des Keils unmittelbar beteiligten Personen den gefährlichen Bedingungen solcher Gefahrenumgebungen ausgesetzt.

Bei der Verbindung von schweren Bauteilen ergibt sich zudem der weitere Nachteil, dass das Verkeilungssystem beziehungsweise der Keil sehr groß und sehr schwer ausgeführt sein müssen, um den auftretenden mechanischen Beanspruchungen standhalten zu können.

### Technische Aufgabe

Die zu lösende Aufgabe der vorliegenden Erfindung besteht darin, ein Verbindungssystem ohne die aus dem Stand der Technik bekannten Nachteile bereitzustellen.

### Technische Lösung

Diese Aufgabe wird durch ein Verbindungssystem zur Verbindung von Bauteilen, umfassend mindestens ein an einem ersten Bauteil fixiertes Flächenelement, mindestens einen an einem zweiten Bauteil fixierten und das Flächenelement in einer Ausnehmung durchsetzenden Keilzapfen mit einer eine Auflagefläche umfassenden Aufnahmeöffnung, ein in der Aufnahmeöffnung angeordnetes und einen ersten Keil umfassendes Verkeilungssystem, welches zwischen der Auflagefläche und dem Flächenelement eingekeilt ist, gelöst, wobei das Verkeilungssystem erfindungsgemäß zumindest einen weiteren Keil unter Bildung gegenüberliegender Angriffsflächen umfasst, und wobei zumindest zwei Keile im Wesentlichen in Orientierung ihrer Längsachsen gegeneinander in eine formschlüssige und kraftschlüssige Stellung zwischen der gesamten Auflagefläche und dem Flächenelement verschiebbar und mittels eines Fixiersystems in der formschlüssigen und kraftschlüssigen Stellung fixierbar sind und wobei die Auflagefläche, die Angriffsflächen und das Flächenelement Flächennormalvektoren aufweisen, die normal zur Orientierung der Längsachsen der Keile orientiert sind.

Das Verbindungssystem ist geeignet, die Bauteile miteinander zu verbinden, wobei unter Bauteil eine Komponente oder ein Einzelteil eines technischen Komplexes wie beispielsweise eine Maschine oder eine Vorrichtung zu verstehen ist. Das erste Bauteil weist ein an ihm fixiertes Flächenelement auf. Das Flächenelement, beispielsweise als ebene Grundplatte ausgeführt, ist mit dem ersten Bauteil fix verbunden, beispielsweise angeschweißt. Das zweite Bauteil weist einen an ihm fixierten Keilzapfen mit einer eine Auflagefläche umfassenden Aufnahmeöffnung auf. Die Aufnahmeöffnung des Keilzapfens ist beispielsweise eine Bohrung durch den Keilzapfen oder eine Ausfräsung durch den Keilzapfen. Die Bohrung beziehungsweise die Ausfräsung wird von einer Mantelfläche begrenzt. Eine Teilfläche dieser Mantelfläche bildet die Auflagefläche, welche beispielsweise die Form einer ebenen Fläche oder die Form einer Mantelfläche eines in Richtung seiner Längsachse durchschnittenen Zylinders aufweist.

Der Keilzapfen ist mit dem zweiten Bauteil fix verbunden, beispielsweise angeschweißt. Der Keilzapfen durchsetzt das mit dem ersten Bauteil fix verbundene Flächenelement in der Ausnehmung. In der Aufnahmeöffnung des Keilzapfens befindet sich das Verkeilungssystem, welches zwischen der Auflagefläche und dem Flächenelement eingekeilt ist. Eingekeilt ist so zu verstehen, dass das Verkeilungssystem in der Aufnahmeöffnung zwischen der Auflagefläche und dem Flächenelement eingeklemmt, beziehungsweise eingezwängt ist.

Erfindungsgemäß umfasst das Verkeilungssystem zumindest einen weiteren Keil unter Bildung einander gegenüberliegender Angriffsflächen. Der weitere Keil des Verkeilungssystems wird im Verkeilungssystem derart angeordnet, dass einander gegenüberliegende Angriffsflächen des Verkeilungssystems gebildet werden beziehungsweise entstehen. Diese einander gegenüberliegenden Angriffsflächen entsprechen dabei jeweils genau einer Fläche jeweils eines Keils. Zumindest zwei Keile des Verkeilungssystems sind im Wesentlichen in Orientierung ihrer Längsachsen gegeneinander in eine formschlüssige und kraftschlüssige Stellung zwischen der gesamten Auflagefläche und dem Flächenelement verschiebbar. Die Keile sind entlang von Verschiebeflächen gegeneinander verschiebbar. In der formschlüssigen und kraftschlüssigen Stellung der Keile wird die Auflagefläche des Keilzapfens zumindest zu einem großen Teil von einer Angriffsfläche des Verkeilungssystems berührt. Weites berührt die gegenüberliegende Angriffsfläche des Verkeilungssystems in der formschlüssigen und kraftschlüssigen Stellung zumindest zu einem großen Teil das Flächenelement. In einer Seitenansicht des Verkeilungssystems sind die Längsachsen der Keile parallel zu den Angriffsflächen des Verkeilungssystems orientiert. Die Keile weisen in der Seitenansicht beispielsweise eine dreieckige Form oder eine trapezförmige Form auf.

In der formschlüssigen und kraftschlüssigen Stellung des Verkeilungssystems berühren einander auch die Verschiebeflächen der Keile zumindest zu einem großen Teil.

Die Keile sind erfindungsgemäß mittels des Fixiersystems in der formschlüssigen und kraftschlüssigen Stellung fixierbar, wobei das Fixiersystem verhindert, dass die Keile aus der formschlüssigen und kraftschlüssigen Stellung verschoben werden können, beispielsweise durch Bewegungen und/oder durch Vibrationen und/oder durch Erschütterungen und/oder durch eine durch unterschiedliche Wärmeausdehnungen der Bauteile hervorgerufene Verschiebung des Verkeilungssystems und des Fixiersystems in Bezug auf die Aufnahmeöffnung des Keilzapfens.

Das Fixiersystem gewährleistet eine hohe Sicherheit gegen die Verschiebung der Keile aus der formschlüssigen und kraftschlüssigen Stellung und stellt damit auch einen zusätzlichen Sicherheitsfaktor für eine Aufrechterhaltung der Verbindung der Bauteile dar.

Erfindungsgemäß sind die Flächennormalvektoren der Auflagefläche, der Angriffsflächen und des Flächenelements normal zur Orientierung der Längsachsen der Keile orientiert. Unter Flächennormalvektor einer Fläche ist jener Vektor zu verstehen, der an jedem Flächenelement der Fläche normal zu einer an diesem Flächenelement angelegten Tangentialebene orientiert ist. Die Keile sind im Wesentlichen in einem 90° Winkel zu diesen Flächennormalvektoren verschiebbar. Der Ausdruck im Wesentlichen ist dabei so zu verstehen, dass, abgesehen von durch Spielräume zwischen dem Verkeilungssystem und der Aufnahmeöffnung hervorgerufene Bewegungskomponenten in andere, nicht parallel zu den Längsachsen orientierten Bewegungsrichtungen, nur Bewegungsrichtungen der Keile parallel zu den Längsachsen der Keile möglich sind.

Ein wesentlicher Vorteil des erfindungsgemäßen Verbindungssystems ist, dass die beispielsweise durch Bewegungen und/oder durch Vibrationen und/oder durch Erschütterungen und/oder durch die unterschiedlichen Wärmeausdehnungen der Bauteile hervorgerufene Verschiebung des Verkeilungssystems und des Fixiersystems in Bezug auf die Aufnahmeöffnung des Keilzapfens nicht wie bei den aus dem Stand der Technik bekannten Verbindungssystemen zu einer Lockerung beziehungsweise Lösung der Verbindung der Bauteile führt, da die formschlüssige und kraftschlüssige Stellung des Verkeilungssystems auch bei einer solchen Verschiebung des Verkeilungssystems und des Fixiersystems aufrecht bleibt.

Ein weiterer Vorteil des erfindungsgemäßen Verbindungssystems ist dadurch gegeben, dass die im Stand der Technik angewandte Methode des Nachschlagens der Keile des Verkeilungssystems in die ursprüngliche Stellung nicht notwendig ist, da bei der Verschiebung des erfindungsgemäßen Verkeilungssystems und des Fixiersystems die formschlüssige und kraftschlüssige Stellung aufrecht bleibt. Vor allem in Gefahrenumgebungen, wie beispielsweise Hüttenwerken und/oder Stahlwerken, können damit Personen, die sonst zum Nachschlagen der Keile des Verkeilungssystems die Gefahrenumgebung betreten müssten, vor potentiellen Risikosituationen geschützt werden.

Darüber hinaus ist das erfindungsgemäße Verbindungssystem mit dem Vorteil verbunden, dass die Keile des Verkeilungssystems kleiner und leichter als bei den aus dem Stand der Technik bekannten Verbindungssystemen ausgeführt werden können, da die auftretenden mechanischen Beanspruchungen auf zumindest zwei Keile aufgeteilt werden.

In einer bevorzugten Ausführungsform des erfindungsgemäßen Verbindungssystems umfasst das Verkeilungssystem genau zwei oder genau drei Keile.

Umfasst das Verkeilungssystem genau zwei oder genau drei Keile, so ergeben sich einerseits die oben genannten Vorteile des erfindungsgemäßen Verbindungssystems, andererseits kann beispielsweise bei einem genau drei Keile umfassenden Verbindungssystem die mechanische Beanspruchung auf diese drei Keile aufgeteilt werden. Dies bietet vor allem bei der Verbindung von sehr schweren Bauteilen einen erheblichen Vorteil, da die Keile des Verkeilungssystems kleiner und leichter ausgeführt sein können.

Das Verkeilungssystem kann auch vier, fünf, sechs, sieben, acht, neun, zehn oder mehr Keile umfassen. Damit können die Keile noch kleiner und leichter ausgeführt werden.

In einer weiteren bevorzugten Ausführungsform umfasst das erfindungsgemäße Verbindungssystem ein an zumindest zwei Keilen angreifendes, Abstützelemente und Verstellelemente umfassendes Bewegungssystem, wobei zwischen jeweils einem Abstützelement und jeweils einem Keil ein Verstellelement zur Verschiebung der Keile in die formschlüssige und kraftschlüssige Stellung angeordnet ist.

Das Bewegungssystem umfasst Abstützelemente und Verstellelemente. Die Verstellelemente greifen an jeweils gegegenüberliegenden Seitenflächen unterschiedlicher Keile an, wobei die Seitenflächen im Wesentlichen Normal zu den Längsachsen der Keile orientiert sind. Zwischen jeweils einer Seitenfläche eines Keils und jeweils einem Abstützelement befindet sich ein Verstellelement, welches geeignet ist, den Keil gegen den anderen Keil, im Wesentlichen entlang seiner Längsachse, in die formschlüssige und kraftschlüssige Stellung zu verschieben.

Das Bewegungssystem ist geeignet, die Keile jeweils in entgegengesetzte Richtungen entlang ihrer Längsachsen zu verschieben. Die Verstellelemente sind an den Abstützelementen abgestützt, wobei die Abstützelemente beispielsweise die seitlichen Arme einer die Keile in ihrer Längserstreckung umgreifenden Spannzange sein können. Die Abstützelemente können aber auch direkt an den Keilen fixiert und/oder am Flächenelement fixiert sein.

Mittels des Bewegungssystems ergibt sich der Vorteil, dass die Keile des Verkeilungssystems ohne Einsatz schweren Geräts, wie beispielsweise ein Hammer, in die formschlüssige und kraftschlüssige Stellung gebracht werden können.

Eine andere, besonders bevorzugte Ausführungsform des erfindungsgemäßen Verbindungssystems ist dadurch gekennzeichnet, dass die Verstellelemente als Hydraulikzylinder ausgebildet sind.

Der Einsatz von als Hydraulikzylinder ausgebildeten Verstellelementen ermöglicht eine einfache und komfortable Möglichkeit der Verschiebung der Keile in die formschlüssige und kraftschlüssige Stellung.

Ein weiterer Vorteil, der sich bei Einsatz von als Hydraulikzylinder ausgeführten Verstellelementen ergibt, ist, dass ohne manuelle Kraftanstrengung sehr hohe und/oder genau definierte Kräfte auf die Seitenflächen der Keile aufgebracht werden können, wodurch auch extrem schwere Bauteile einfach miteinander verbunden werden können.

In einer weiteren bevorzugten Ausführungsform des erfindungsgemäßen Verbindungssystems sind die Keile selbsthemmend gegen eine Verschiebung aus der formschlüssigen und kraftschlüssigen Stellung ausgebildet.

Selbsthemmend bedeutet, dass die Keile nach ihrer Verschiebung in die formschlüssige und kraftschlüssige Stellung ohne Einwirkung von äußeren Kräften in Richtung der Längsachsen der Keile in dieser Stellung verharren. Dies erfolgt durch entsprechende Wahl der Winkel der Keile in Verbindung mit Reibungskräften. Unter Winkel des Keils ist der eingeschlossene Winkel zwischen der Angriffsfläche des Keils und der Verschiebefläche des Keils oder der eingeschlossene Winkel zwischen den beiden Verschiebeflächen des Keils zu verstehen. Vorzugsweise liegt dieser Winkel zwischen 5° und 15°, besonders bevorzugt zwischen 6° und 8°.

Dadurch ergibt sich der Vorteil, dass sich die Keile von selbst in der formschlüssigen und kraftschlüssigen Stellung halten können

Auch selbsthemmende Keile werden aus Sicherheitsgründen vorzugsweise zusätzlich durch das Fixiersystem daran gehindert, sich aus der formschlüssigen und kraftschlüssigen Stellung zu verschieben.

In einer bevorzugten Ausführungsform des erfindungsgemäßen Verbindungssystems umfasst das Fixiersystem zumindest ein an den Keilen angreifendes Fixierelement, vorzugsweise eine Schraube, welches an den Abstützelementen abgestützt ist.

Nach Verschiebung der Keile in die formschlüssige und kraftschlüssige Stellung durch das Bewegungssystem werden die Verstellelemente vorzugsweise entfernt und durch das zumindest eine Fixierelement des Fixiersystems ersetzt. Das Fixierelement ist beispielsweise eine Schraube, welches das Abstützelement durchsetzt und in diesem abgestützt ist. Die Schraube ist soweit drehbar, bis die Stirnfläche der Schraube an der Seitenfläche des Keils angreift, womit eine permanent wirkende Kraft auf den Keil ausübbar ist.

In einer alternativen Ausführungsform ist das Fixiersystem als eine die Keile in einer Nut der Keile in Richtung der Längsachsen der Keile durchsetzende Schraube mit Mutter oder als ein an den Keilen angreifendes Spannschloss ausgebildet. Das Spannschloss umfasst an den Seitenflächen der jeweiligen Keile angreifende und mittels Schrauben verbundene Gegenblöcke, wobei der Abstand der Gegenblöcke mittels der Schrauben verstellbar ist.

Das Fixiersystem verhindert, dass die Keile aus der formschlüssigen und kraftschlüssigen Stellung verschoben werden können.

Das Fixiersystem gewährleistet eine hohe Sicherheit gegen die Verschiebung der Keile aus der formschlüssigen und kraftschlüssigen Stellung und stellt damit einen zusätzlichen Sicherheitsfaktor für eine Aufrechterhaltung der Verbindung der Bauteile dar.

In einer weiteren bevorzugten Ausführungsform des erfindungsgemäßen Verbindungssystems weisen die Keile Führungselemente zur führbaren Verschiebung der Keile in die formschlüssige und kraftschlüssige Stellung und aus der formschlüssigen und kraftschlüssigen Stellung auf.

Die Führungselemente sind beispielsweise an den Keilen angebrachte Seitenwände oder in die Keile gefräßte Nute und Gegennute.

Dadurch wird sichergestellt, dass die Verschiebung der Keile gegeneinander im Wesentlichen nur entlang ihrer Längsachsen erfolgen kann.

Ein weiterer Gegenstand der vorliegenden Erfindung ist die Verwendung des erfindungsgemäßen Verbindungssystems zur Verbindung eines als metallurgisches Gefäß ausgebildeten ersten Bauteils mit einem als Tragring ausgebildeten zweiten Bauteil.

Ein metallurgisches Gefäß ist beispielsweise ein Konvertergefäß, vorzugsweise ein Wechselkonvertergefäß. Ein metallurgisches Gefäß kann aber auch jedes andere Gefäß sein, das geeignet ist, schmelzflüssige metallhältige Stoffe, beispielsweise flüssiges Roheisen oder flüssiger Stahl, aufzunehmen. Das metallurgische Gefäß, insbesondere das Konvertergefäß ist üblicherweise an einem Tragring, der das metallurgische Gefäß zumindest teilweise in einem Abstand umfasst, aufgehängt und mit diesem verbunden. Erfindungsgemäß erfolgt diese Aufhängung zumindest teilweise mittels ein oder mehrerer erfindungsgemäßer Verbindungssysteme. Am Tragring sind üblicherweise zwei diametral gegenüberliegende Tragzapfen, welche eine Drehachse bilden, angebracht und drehbar gelagert. Das metallurgische Gefäß ist um diese Drehachse in verschiedene Positionen, wie beispielsweise eine Chargierposition oder eine Abstichposition, schwenkbar. In der Chargierposition wird beispielsweise das flüssige Roheisen in das metallurgische Gefäß chargiert, wodurch es zu einer Wärmeausdehnung des metallurgischen Gefäßes und des an ihm angebrachten Flächenelements, vorzugsweise ein das metallurgische Gefäß umfassender Auflagering, kommt. Auch der Tragring unterliegt bei der Chargierung des flüssigen Roheisens in das metallurgische Gefäß einer Wärmeausdehnung, die üblicherweise in ihrem Ausmaß verschieden von der Wärmeausdehnung des metallurgischen Gefäßes ist.

Die erfindungsgemäße Verwendung des erfindungsgemäßen Verbindungssystems zum Verbinden des metallurgischen Gefäßes mit dem Tragring bietet nun den Vorteil, dass die durch die unterschiedliche Wärmeausdehnung des metallurgischen Gefäßes und des Tragrings hervorgerufene Verschiebung des Verkeilungssystems und des Fixiersystems in Bezug auf die Aufnahmeöffnung des Keilzapfens nicht zu einer Lockerung beziehungsweise Lösung der Verbindung zwischen dem metallurgischen Gefäß und dem Tragring führt, da die formschlüssige und kraftschlüssige Stellung des Verkeilungssystems auch bei der Verschiebung des Verkeilungssystems und des Fixiersystems aufrecht bleibt.

Ein weiterer Vorteil der erfindungsgemäßen Verwendung des erfindungsgemäßen Verbindungssystems zum Verbinden des metallurgischen Gefäßes mit dem Tragring ist, dass die beispielsweise durch Bewegungen und/oder Vibrationen und/oder Erschütterungen hervorgerufene Verschiebung des Verkeilungssystems und des Fixiersystems in Bezug auf die Aufnahmeöffnung des Keilzapfens nicht zur Lockerung beziehungsweise Lösung der Verbindung zwischen dem metallurgischen Gefäß und dem Tragring führt, da die formschlüssige und kraftschlüssige Stellung des Verkeilungssystems auch bei der Verschiebung des Verkeilungssystems und des Fixiersystems gewährleistet bleibt.

Darüber hinaus ist die erfindungsgemäße Verwendung des erfindungsgemäßen Verbindungssystems zum Verbinden des metallurgischen Gefäßes mit dem Tragring mit dem Vorteil verbunden, dass die Keile kleiner und leichter als bei aus dem Stand der Technik bekannten Verbindungssystemen ausgeführt werden können, da die auftretenden mechanischen Beanspruchungen der Keile erfindungsgemäß auf zumindest zwei Keile aufgeteilt werden.

Ein noch ganz wesentlicher Vorteil der erfindungsgemäßen Verwendung des erfindungsgemäßen Verbindungssystems zum Verbinden des metallurgischen Gefäßes mit dem Tragring ist dadurch gegeben, dass die im Stand der Technik angewandte Methode des Nachschlagens des Verkeilungssystems in die ursprüngliche Stellung nicht notwendig ist, da bei der Verschiebung des erfindungsgemäßen Verkeilungssystems und Fixiersystems die formschlüssige und kraftschlüssige Stellung erhalten bleibt. Vor allem in Gefahrenumgebungen, wie beispielsweise Hüttenwerken und/oder Stahlwerken oder überall dort, wo metallurgische Gefäße im Einsatz sind, können damit Personen, die sonst zum Nachschlagen des Verkeilungssystems die Gefahrenumgebung betreten müssten, vor potentiellen Risikosituationen geschützt werden.

Bei einer weiteren Ausführungsform der Verwendung des erfindungsgemäßen Verbindungssystems zum Verbinden des metallurgischen Gefäßes mit dem Tragring ist der Tragring mit dem metallurgischen Gefäß mittels zumindest zwei am Umfang des Tragrings und am Umfang des metallurgischen Gefäßes angeordneter Verbindungssysteme verbunden.

Das metallurgische Gefäß ist mittels des erfindungsgemäßen Verbindungssystems an zumindest zwei Stellen mit dem Tragring verbunden.

Eine andere vorteilhafte Ausführungsform der Verwendung des erfindungsgemäßen Verfahrens zum Verbinden des metallurgischen Gefäßes mit dem Tragring ist dadurch gekennzeichnet, dass der Tragring rund ist und genau zwei, vorzugsweise vier Verbindungssysteme am Umfang des Tragrings und am Umfang des metallurgischen Gefäßes angeordnet sind oder dass der Tragring hufeisenförmig ist und genau drei, vorzugsweise sechs Verbindungssysteme am Umfang des Tragrings und am Umfang des metallurgischen Gefäßes angeordnet sind.

Damit ergibt sich der Vorteil, dass je nach Art des Tragrings einerseits eine stabile und sichere Verbindung zwischen dem metallurgischen Gefäß und dem Tragring herstellbar ist, wobei die Verbindungssysteme nur wenig Platz einnehmen und somit mehr Platz für weitere, dem metallurgischen Gefäß zugeordnete Komponenten, wie beispielsweise Messsysteme oder Schutzvorrichtungen, vorhanden sind.

Ein weiterer Gegenstand der vorliegenden Erfindung ist ein Verfahren zur Verbindung von Bauteilen mit dem erfindungsgemäßen Verbindungssystem, wobei die Keile mittels der Verstellelemente durch im Wesentlichen parallel zu den Längsachsen der Keile wirkende Kräfte in die formschlüssige und kraftschlüssige Stellung verschoben werden.

Ein weiterer Gegenstand der vorliegenden Erfindung ist ein Verfahren zur Fixierung der Keile in der formschlüssigen und der kraftschlüssigen Stellung von mit dem erfindungsgemäßen Verbindungssystem verbundenen Bauteilen, bei dem die Keile mittels des an den Keilen angreifenden Fixierelements durch permanent und parallel zu den Längsachsen der Keile wirkende Kräfte in der formschlüssigen und kraftschlüssigen Stellung fixiert werden.

Nach Verschiebung der Keile in die formschlüssige und kraftschlüssige Stellung durch das Bewegungssystem werden die Verstellelemente vorzugsweise entfernt und durch das zumindest eine Fixierelement des Fixiersystems ersetzt. Das Fixierelement ist beispielsweise eine Schraube, welches das Abstützelement durchsetzt und in diesem abgestützt ist. Die Schraube wird so weit gedreht, bis die Stirnfläche der Schraube an der Seitenfläche des Keils angreift, womit eine permanent wirkende Kraft auf den Keil ausgeübt wird.

In einer alternativen Ausführungsform ist das Fixiersystem als eine die Keile in einer Nut der Keile in Richtung der Längsachsen der Keile durchsetzende Schraube mit Mutter oder als ein an den Keilen angreifendes Spannschloss ausgebildet. Das Spannschloss umfasst an den Seitenflächen der jeweiligen Keile angreifende und mittels Schrauben verbundene Gegenblöcke, wobei der Abstand der Gegenblöcke mittels der Schrauben verstellbar ist.

Ein anderer Gegenstand der vorliegenden Erfindung ist ein Verfahren zum Lösen der Keile aus der formschlüssigen und kraftschlüssigen Stellung von mit dem erfindungsgemäßen Verbindungssystem verbundenen Bauteilen, bei dem die Keile mittels der Verstellelemente durch im Wesentlichen parallel zu den Längsachsen der Keile wirkende Kräfte aus der formschlüssigen und kraftschlüssigen Verbindung verschoben werden.

Durch die genannten erfindungsgemäßen Verfahren zur Verbindung von Bauteilen und zur Fixierung und Lösung der Keile ergibt sich der große Vorteil, dass die Bauteile mittels des selben Verbindungssystems, ohne zusätzlichem apparativen Aufwand, verbunden, fixiert und auch leicht wieder gelöst werden können.

### Kurze Beschreibung der Zeichnungen

In der Folge wird die Erfindung anhand beispielhafter schematischer Figuren näher erläutert.
FIG 1 zeigt eine Seitenansicht eines aus dem Stand der Technik bekannten Verbindungssystems.
FIG 2 zeigt eine Seitenansicht eines erfindungsgemäßen Verbindungssystems.
FIG 3 zeigt eine Seitenansicht eines erfindungsgemäßen Verbindungssystems mit einem Bewegungssystem und einem Fixiersystem.
FIG 4 zeigt eine Schrägansicht eines erfindungsgemäßen Verbindungssystems mit einem Bewegungssystem und einem Fixiersystem.
FIG 5 zeigt eine Seitenansicht eines erfindungsgemäßen Verbindungssystems nach dem Verschieben der Keile in die kraftschlüssige und formschlüssige Stellung.
FIG 6 zeigt eine Schrägansicht eines erfindungsgemäßen Verbindungssystems nach dem Verschieben der Keile in die kraftschlüssige und formschlüssige Stellung.
FIG 7 zeigt eine Seitenansicht eines erfindungsgemäßen Verbindungssystems im Zustand fixierter Keile.
FIG 8 zeigt eine Schrägansicht eines erfindungsgemäßen Verbindungssystems im Zustand fixierter Keile.
FIG 9 zeigt die Verwendung eines erfindungsgemäßen Verbindungssystems bei einem Wechselkonverter mit hufeisenförmigem Tragring im Grundriss.
FIG 10 zeigt eine Seitenansicht eines Keilzapfens mit Sicht in die Aufnahmeöffnung mit Auflagefläche.

### Beschreibung der Ausführungsformen

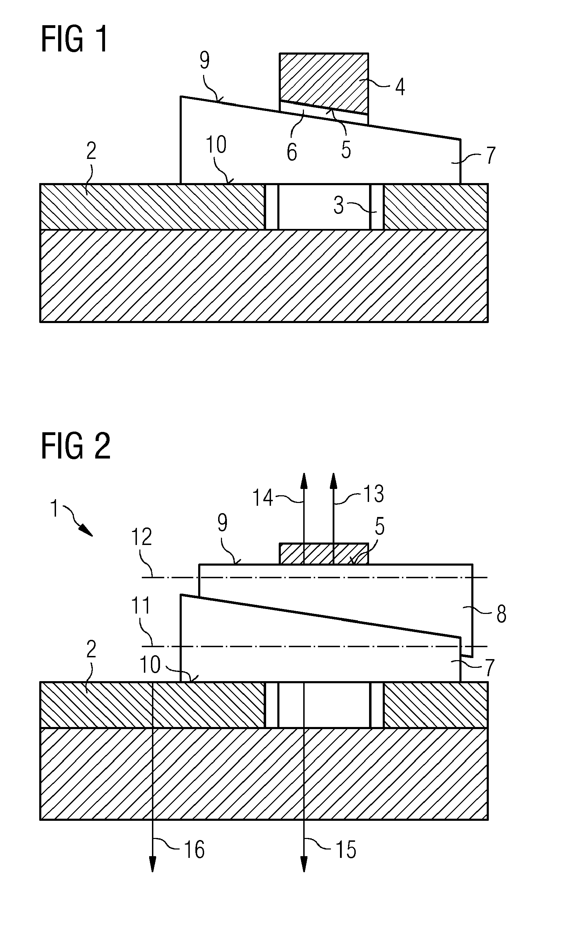

FIG 1 zeigt eine Seitenansicht eines aus dem Stand der Technik bekannten Verbindungssystems zur Verbindung von Bauteilen. Dieses bekannte Verbindungssystem umfasst ein am ersten Bauteil fixiertes Flächenelement (2), einen am zweiten Bauteil fixierten und das Flächenelement (2) in einer Ausnehmung (3) durchsetzenden Keilzapfen (4) mit einer eine Auflagefläche (5) umfassenden Aufnahmeöffnung (6) und ein in der Aufnahmeöffnung (6) angeordnetes und einen ersten Keil (7) umfassendes Verkeilungssystem, welches zwischen der Auflagefläche (5) und dem Flächenelement (2) eingekeilt ist. Um die Aufnahmeöffnung (6) darstellen zu können ist in FIG 1 das Verkeilungssystem in einem unverkeilten Zustand dargestellt.

Zwischen der Auflagefläche (5) und dem Flächenelement (2) befindet sich der erste Keil (7) mit zwei gegenüberliegenden, zueinander schief beziehungsweise nicht parallel orientierten Angriffsflächen (9,10). Das Verkeilungssystem umfasst in diesem aus dem Stand der Technik bekannten Verbindungssystem nur den ersten Keil (7), wobei der Keil (7) die einzige Komponente des Verkeilungssystems ist. Das Verkeilungssystem weist daher ebenfalls die gegenüberliegenden, zueinander schief beziehungsweise nicht parallel orientierten Angriffsflächen (9,10) auf. Der erste Keil (7) liegt im eingekeilten Zustand mit seiner Angriffsfläche (9) an der Auflagefläche (5) der Aufnahmeöffnung (6) und mit der anderen Angriffsfläche (10) am Flächenelement (2) auf.

FIG 2 zeigt eine Seitenansicht eines erfindungsgemäßen Verbindungssystems (1). Das Verbindungssystem (1) ist dadurch gekennzeichnet, dass das Verkeilungssystem zusätzlich zum in FIG 1 dargestellten Keil (7) zumindest einen weiteren Keil (8) umfasst. Die Keile (7,8) sind in der hier dargestellten Ausführungsform trapezförmig ausgeführt. Dieses Verkeilungssystem weist gegenüberliegende, in FIG 2 als parallele Linien dargestellte Angriffsflächen (9,10) auf, wobei die Keile (7,8) im Wesentlichen in Orientierung ihrer Längsachsen (11,12) gegeneinander in eine formschlüssige und kraftschlüssige Stellung, bezogen auf die Auflagefläche (5) und das Flächenelement (2), verschiebbar sind und die Auflagefläche (5), die Angriffsflächen (9,10) und das Flächenelement (2) Flächennormalvektoren (13,14,15,16) aufweisen, die normal zur Orientierung der Längsachsen (11,12) der Keile (7,8) orientiert sind. Der Flächennormalvektor (13) ist der Flächennormalvektor zur Auflagefläche (5). Der Flächennormalvektor (14) ist der Flächennormalvektor zur Angriffsfläche (9). Der Flächennormalvektor (15) ist der Flächennormalvektor zur Angriffsfläche (10). Der Flächennormalvektor (16) ist der Flächennormalvektor zum Flächenelement (2). In der in FIG 2 dargstellten Seitenansicht ist das Verkeilungssystem in der formschlüssigen und kraftschlüssigen Stellung der Keile (7,8) dargestellt. Da sich in dieser Stellung der Keile (7,8) die beiden Angriffsflächen (9,10) jeweils mit der Auflagefläche (5) beziehungsweise mit dem Flächenelement (2) decken, scheinen die Flächennormalvektoren (13) und (14) beziehungsweise die Flächennormalvektoren (15) und (16) von der gleichen Fläche auszugehen.

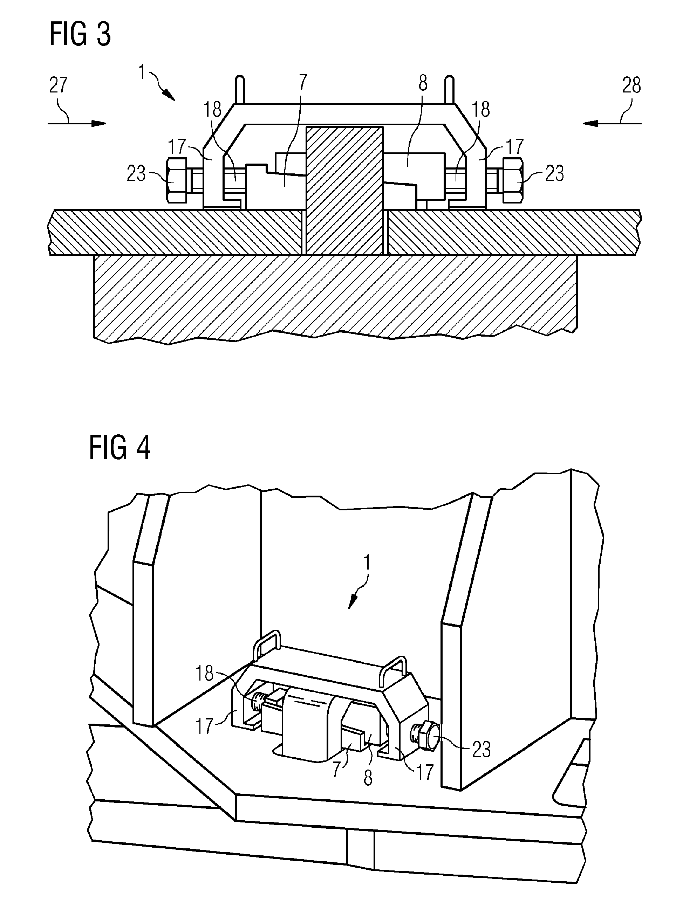

FIG 3 zeigt eine Seitenansicht eines erfindungsgemäßen Verbindungssystems (1) mit einem Bewegungssystem und einem Fixiersystem. Das Verbindungssystem (1) umfasst Verstellelemente (18), welche an Abstützelementen (17) abgestützt sind. In der in FIG 3 dargestellten Ausführungsform des Verbindungssystems (1) sind die Abstützelemente (17) die seitlichen Arme einer die Keile (7,8) in ihrer Längserstreckung umgreifenden Spannzange.

Zwischen jeweils einem Abstützelement (17) und jeweils einem Keil (7,8) befindet sich ein Verstellelement (18) zur Verschiebung der Keile (7,8) in die formschlüssige und kraftschlüssige Stellung.

Nach Verschiebung der Keile (7,8) in die formschlüssige und kraftschlüssige Stellung durch das Bewegungssystem werden die Verstellelemente (18) entfernt, wonach zumindest ein Verstellelement (18) durch ein Fixierelement (23) ersetzt wird. Die Fixierelemente (23) sind in der in FIG 3 dargestellten Ausführungsform als Schrauben ausgeführt. Die Schrauben durchsetzen die Abstützelemente (17) und sind in diesen abgestützt.

Die Schrauben sind soweit drehbar, bis die Stirnflächen der Schrauben an den Seitenflächen der Keile (7,8) angreifen, wodurch permanent wirkende Kräfte in die in FIG 3 mit den Bezugszeichen (27) und (28) bezeichneten Richtungen auf die Keile (7,8) ausgeübt werden. Auf den Keil (7) wirkt eine in die Richtung (27) orientierte permanente Kraft, auf den Keil (8) wirkt eine in die Richtung (28) orientierte permanente Kraft. Durch diese permanent wirkenden Kräfte auf die Keile (7,8) wird eine Verschiebung der Keile (7,8) aus der formschlüssigen und kraftschlüssigen Stellung wirksam und zuverlässig verhindert.

FIG 4 zeigt eine Schrägansicht eines erfindungsgemäßen Verbindungssystems (1) mit einem Bewegungssystem und einem Fixiersystem. Die Bezugszeichen in FIG 4 entsprechen den Bezugszeichen in FIG 3.

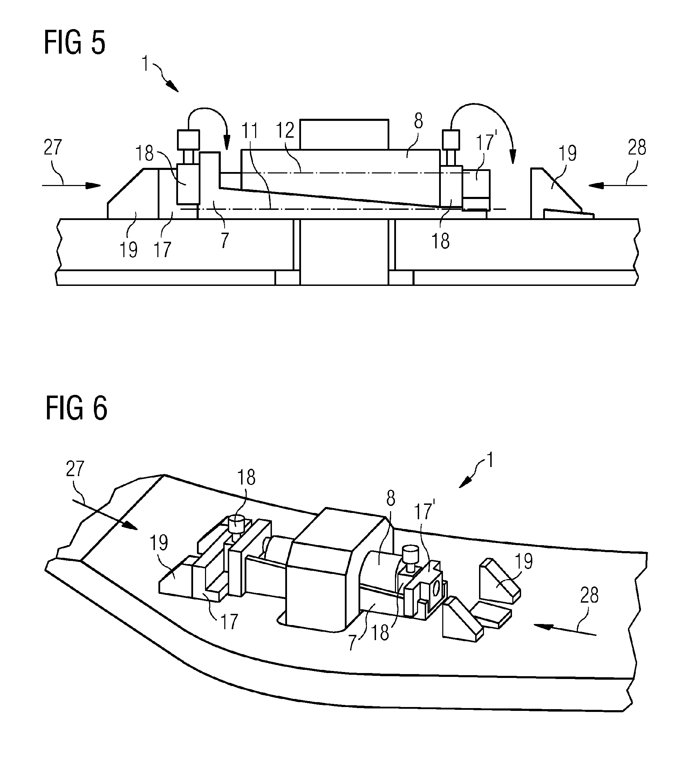

FIG 5 zeigt eine Seitenansicht eines erfindungsgemäßen Verbindungssystems (1) nach dem Verschieben der Keile (7,8) in die formschlüssige und kraftschlüssige Stellung. Mittels der zwischen jeweils einem Abstützelement (17,17') und jeweils einem Keil (7,8) angeordneten Verstellelemente (18) werden die Keile (7,8) in die formschlüssige und kraftschlüssige Stellung verschoben. Die in FIG 5 dargestellen Verstellelemente (18) sind als Hydraulikzylinder ausgebildet. Die Besonderheit dieser Ausführungsform besteht darin, dass ein Abstützelement (17') direkt am Keil (7) fixiert ist. Die Verschiebung des Keils (7) in die formschlüssige und kraftschlüssige Stellung erfolgt dadurch, dass das am Abstützelement (17) abgestützte Verstellelement (18) eine parallel zur Längsachse (11) des Keils (7) wirkende Kraft auf den Keil (7) ausübt, wobei der Keil (7) in die mit dem Bezugszeichen (27) dargestellte Richtung verschoben wird. Die Verschiebung des Keils (8) in die formschlüssige und kraftschlüssige Stellung erfolgt dadurch, dass das am Abstützelement (17') abgestützte Verstellelement (18) eine parallel zur Längsachse (12) des Keils (8) wirkende Kraft auf den Keil (8) ausübt, wobei der Keil (8) in die mit dem Bezugszeichen (28) dargestellte Richtung verschoben wird.

Das Lösen der Keile (7,8) aus der formschlüssigen und kraftschlüssigen Stellung umfasst das Entfernen der beiden Verstellelemente (18) und des Abstützelementes (17). Anschließend werden die zuvor entfernten Verstellelemente (18) in die mit den gebogenen Pfeilen angedeuteten Positionen eingesetzt. Mittels des zwischen einem Gegenblock (17) und dem Abstützelement (17') eingesetzten Verstellelements (18), welches als Hydraulikzylinder ausgeführt ist, wird der Keil (7) nach Aktivierung des Hydraulikzylinders in die Richtung (28) verschoben. Das Verstellelement (18) ist dabei am Gegenblock (19) abgestützt. Zusätzlich wird das ursprünglich zwischen dem Abstützelement (17) und dem Keil (7) angeordnete und als Hydraulikzylinder ausgeführte Verstellelement (18) zwischen dem Keil (7) und dem Keil (8) eingesetzt. Ein Betätigen dieses Hydraulikzylinders bewirkt eine Verschiebung des Keils (8) in die Richtung (27) und des Keils (7) in die Richtung (28).

FIG 6 zeigt eine Schrägansicht eines erfindungsgemäßen Verbindungssystems (1) nach dem Verschieben der Keile (7,8) in die kraftschlüssige und formschlüssige Stellung. Die Bezugszeichen in FIG 6 entsprechen den Bezugszeichen in FIG 5.

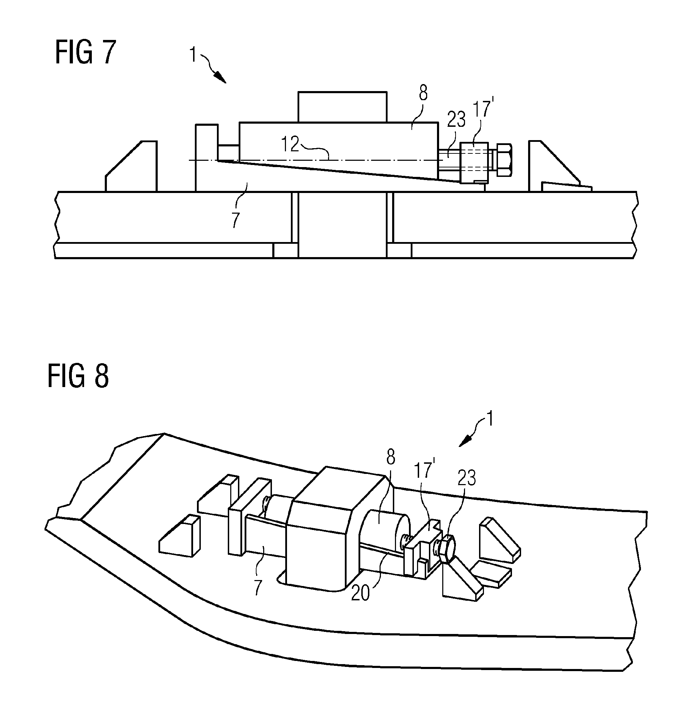

FIG 7 zeigt eine Seitenansicht eines erfindungsgemäßen Verbindungssystems (1) im Zustand fixierter Keile (7,8).

In dieser Ausführungsform des erfindungsgemäßen Verbindungssystems (1) umfasst das Fixiersystem ein an den Keilen (7,8) angreifendes Fixierelement (23), welches als Schraube ausgebildet ist. Das Fixierelement (23) ist am Abstützelement (17') abgestützt.

Nach Verschiebung der Keile (7,8) in die formschlüssige und kraftschlüssige Stellung durch das Bewegungssystem werden die in FIG 7 nicht dargestellten Verstellelemente entfernt, wonach ein Verstellelement (18) durch das Fixierelement (23) ersetzt wird. Das Fixierelement (23) übt, bei einer als Schraube ausgeführten Form nach Drehung derselbigen, eine parallel zur Längsachse (12) des Keils (8) wirkende Kraft auf den Keil (8) beziehungsweise dessen Seitenfläche aus. Durch diese permanente Krafteinwirkung wird eine Verschiebung der Keile (7,8) aus der formschlüssigen und kraftschlüssigen Stellung wirksam und zuverlässig verhindert.

FIG 8 zeigt eine Schrägansicht eines erfindungsgemäßen Verbindungssystems (1) im Zustand fixierter Keile (7,8). Die Bezugszeichen in FIG 8 entsprechen den Bezugszeichen in FIG 7.

Der Keil (7) weist Führungselemente (20) zur führbaren Verschiebung der Keile (7,8) in die formschlüssige und kraftschlüssige Stellung und aus der formschlüssigen und kraftschlüssigen Stellung auf.

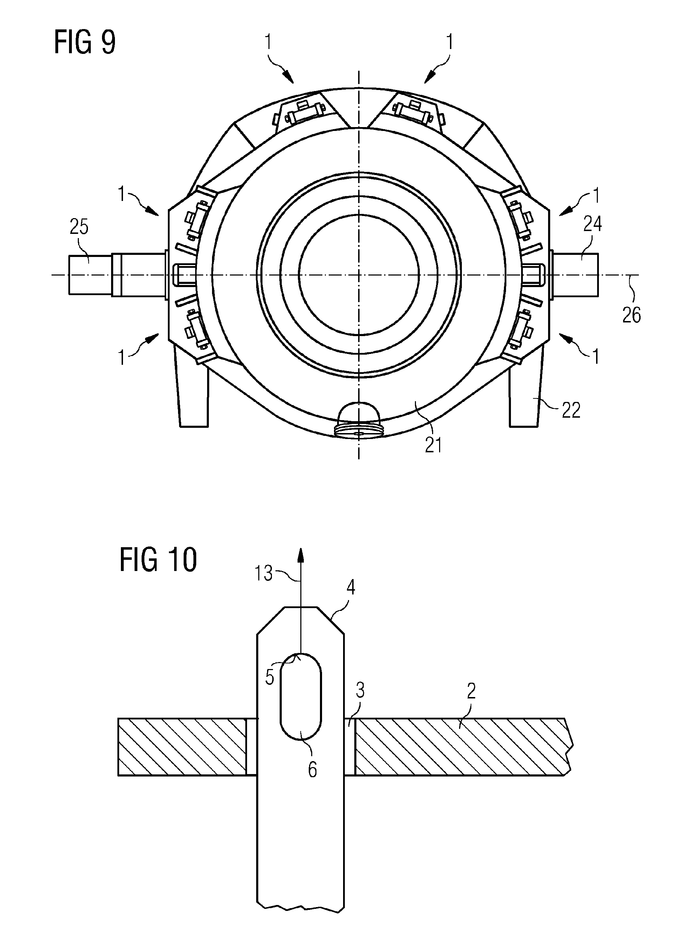

FIG 9 zeigt die Verwendung eines erfindungsgemäßen Verbindungssystems (1) bei einem Wechselkonverter mit hufeisenförmigem Tragring (22) im Grundriss.

Das erste Bauteil ist als metallurgisches Gefäß (21), das zweite Bauteil als Tragring (22) ausgebildet. Das metallurgische Gefäß (21) ist am Tragring (22), der das metallurgische Gefäß (21) zumindest teilweise in einem Abstand umfasst, aufgehängt und mit diesem verbunden. Am Tragring (22) sind zwei diametral gegenüberliegende Tragzapfen (24,25), welche eine Drehachse (26) bilden, angebracht und drehbar gelagert. Das metallurgische Gefäß (21) ist um diese Drehachse (26) in verschiedene Positionen, wie beispielsweise eine Chargierposition oder eine Abstichposition, schwenkbar. In der Chargierposition wird beispielsweise heißes und flüssiges Roheisen in das metallurgische Gefäß (21) chargiert. Nach Behandlung des in das metallurgische Gefäß (21) chargierten Roheisens wird das metallurgische Gefäß (21) in seine Abstichposition geschwenkt in der die Entnahme des behandelten Roheisen als Rohstahl erfolgt.

Bei der in FIG 9 dargestellten Ausführungsform ist das metallurgische Gefäß (21) mittels sechs erfindungsgemäßer Verbindungssysteme (1), welche am Umfang des Tragrings (22) und am Umfang des metallurgischen Gefäßes (21) angeordnet sind, mit dem Tragring (22) verbunden. Dabei sind jeweils zwei Verbindungssysteme (1) im Bereich der Tragzapfen (24,25) symmetrisch zur Drehachse (26) angeordnet. Zwei weitere Verbindungssysteme (1) sind in einem der offenen Seite des hufeisenförmigen Tragrings (22) abgewandten Bereich symmetrisch zu einer zur Drehachse (26) normal orientierten Achse angeordnet.

FIG 10 zeigt eine Seitenansicht des Keilzapfens (4) mit Sicht in die Aufnahmeöffnung (6) mit der Auflagefläche (5). Aus Gründen der besseren Darstellbarkeit der Aufnahmeöffnung (6) ist in FIG 10 das Verkeilungssystem mit den Keilen (7,8) nicht dargestellt. Der am zweiten Bauteil fixierte Keilzapfen (4) durchsetzt das am ersten Bauteil fixierte Flächenelement (2) in der Ausnehmung (3). Die Auflagefläche (5) weist einen Flächennormalvektor (13) auf, der normal zur Orientierung der in FIG 10 nicht dargestellten Längsachsen (11,12) der Keile (7,8) orientiert ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Verbindungssystem
- 2: Flächenelement
- 3: Ausnehmung
- 4: Keilzapfen
- 5: Auflagefläche
- 6: Aufnahmeöffnung
- 7: Keil
- 8: Keil
- 9: Angriffsfläche
- 10: Angriffsfläche
- 11: Längsachse
- 12: Längsachse
- 13: Flächennormalvektor
- 14: Flächennormalvektor
- 15: Flächennormalvektor
- 16: Flächennormalvektor
- 17: Abstützelement
- 17': Abstützelement
- 18: Verstellelement
- 19: Gegenblock
- 20: Führungselemente
- 21: metallurgisches Gefäß
- 22: Tragring
- 23: Fixierelement
- 24: Tragzapfen
- 25: Tragzapfen
- 26: Drehachse
- 27: Richtung
- 28: Richtung

## Patentansprüche

1. Verbindungssystem (1) zur Verbindung von Bauteilen, umfassend
- mindestens ein an einem ersten Bauteil fixiertes Flächenelement (2),
- mindestens einen an einem zweiten Bauteil fixierten und das Flächenelement (2) in einer Ausnehmung (3) durchsetzenden Keilzapfen (4) mit einer eine Auflagefläche (5) umfassenden Aufnahmeöffnung (6),
- ein in der Aufnahmeöffnung (6) angeordnetes und einen ersten Keil (7) umfassendes Verkeilungssystem, welches zwischen der Auflagefläche (5) und dem Flächenelement (2) eingekeilt ist,
**dadurch gekennzeichnet, dass**
das Verkeilungssystem zumindest einen weiteren Keil (8) unter Bildung gegenüberliegender Angriffsflächen (9,10) umfasst, wobei zumindest zwei Keile (7,8) im Wesentlichen in Orientierung ihrer Längsachsen (11,12) gegeneinander in eine formschlüssige und kraftschlüssige Stellung zwischen der gesamten Auflagefläche (5) und dem Flächenelement (2) verschiebbar und mittels eines Fixiersystems in der formschlüssigen und kraftschlüssigen Stellung fixierbar sind und wobei die Auflagefläche (5), die Angriffsflächen (9,10) und das Flächenelement (2) Flächennormalvektoren (13,14,15,16) aufweisen, die normal zur Orientierung der Längsachsen (11,12) der Keile (7,8) orientiert sind.

2. Verbindungssystem (1) nach Anspruch 1, **dadurch gekennzeichnet, dass** das Verkeilungssystem genau zwei oder genau drei Keile (7,8) umfasst.

3. Verbindungssystem (1) nach einem der vorhergehenden Ansprüche, **dadurch gekennzeichnet, dass** es ein an zumindest zwei Keilen (7,8) angreifendes, Abstützelemente (17) und Verstellelemente (18) umfassendes Bewegungssystem umfasst, wobei zwischen jeweils einem Abstützelement (17) und jeweils einem Keil (7,8) ein Verstellelement (18) zur Verschiebung der Keile (7,8) in die formschlüssige und kraftschlüssige Stellung angeordnet ist.

4. Verbindungssystem (1) nach Anspruch 3, **dadurch gekennzeichnet, dass** die Verstellelemente (18) als Hydraulikzylinder ausgebildet sind.

5. Verbindungssystem (1) nach einem der vorhergehenden Ansprüche, **dadurch gekennzeichnet, dass** die Keile (7,8) selbsthemmend gegen eine Verschiebung aus der formschlüssigen und kraftschlüssigen Stellung ausgebildet sind.

6. Verbindungssystem (1) nach einem der Ansprüche 3 bis 5, **dadurch gekennzeichnet, dass** das Fixiersystem zumindest ein an den Keilen (7,8) angreifendes Fixierelement (23), vorzugsweise eine Schraube, welches an den Abstützelementen (17) abgestützt ist, umfasst.

7. Verbindungssystem (1) nach einem der vorhergehenden Ansprüche, **dadurch gekennzeichnet, dass** die Keile (7,8) Führungselemente (20) zur führbaren Verschiebung der Keile (7,8) in die formschlüssige und kraftschlüssige Stellung und aus der formschlüssigen und kraftschlüssigen Stellung aufweisen.

8. Verwendung des Verbindungssystems (1) nach einem der vorhergehenden Ansprüche zur Verbindung eines als metallurgisches Gefäß (21) ausgebildeten ersten Bauteils mit einem als Tragring (22) ausgebildeten zweiten Bauteil.

9. Verwendung des Verbindungssystems (1) nach Anspruch 8, **dadurch gekennzeichnet, dass** der Tragring (22) mit dem metallurgischen Gefäß (21) mittels zumindest zwei am Umfang des Tragrings (22) und am Umfang des metallurgischen Gefäßes (21) angeordneter Verbindungssysteme (1) nach einem der Ansprüche 1 bis 7 verbunden ist.

10. Verwendung des Verbindungssystems (1) nach einem der Ansprüche 8 oder 9, **dadurch gekennzeichnet, dass** der Tragring (22) rund ist und genau zwei, vorzugsweise vier Verbindungssysteme (1) am Umfang des Tragrings (22) und am Umfang des metallurgischen Gefäßes (21) angeordnet sind oder dass der Tragring (22) hufeisenförmig ist und genau drei, vorzugsweise sechs Verbindungssysteme (1) am Umfang des Tragrings (22) und am Umfang des metallurgischen Gefäßes (21) angeordnet sind.

11. Verfahren zur Verbindung von Bauteilen mit einem Verbindungssystem (1) nach einem der Ansprüche 3 bis 7, **dadurch gekennzeichnet, dass** die Keile (7,8) mittels der Verstellelemente (18) durch im Wesentlichen parallel zu den Längsachsen (11,12) der Keile (7,8) wirkende Kräfte in die formschlüssige und kraftschlüssige Stellung verschoben werden.

12. Verfahren zur Fixierung der Keile (7,8) in der formschlüssigen und der kraftschlüssigen Stellung von mit dem erfindungsgemäßen Verbindungssystem (1) nach einem der Ansprüche 3 bis 7 verbundenen Bauteilen, **dadurch gekennzeichnet, dass** die Keile (7,8) mittels des an den Keilen (7,8) angreifenden Fixiersystems durch permanent und parallel zu den Längsachsen (11,12) der Keile (7,8) wirkende Kräfte in der formschlüssigen und kraftschlüssigen Stellung fixiert werden.

13. Verfahren zum Lösen der Keile (7,8) aus der formschlüssigen und kraftschlüssigen Stellung von mit dem Verbindungssystem (1) nach einem der Ansprüche 3 bis 7 verbundenen Bauteilen, **dadurch gekennzeichnet, dass** die Keile (7,8) mittels der Verstellelemente (18) durch im Wesentlichen parallel zu den Längsachsen (11,12) der Keile (7,8) wirkende Kräfte aus der formschlüssigen und kraftschlüssigen Verbindung verschoben werden.
